# EUROPÄISCHE PATENTSCHRIFT

(11) **EP 4 127 519 B1**
(45) Veröffentlichungstag und Bekanntmachung des Hinweises auf die Patenterteilung: **11.09.2024**
(21) Anmeldenummer: 21709370.7
(22) Anmeldetag: 01.03.2021
(51) Int. Cl.: F16H 57/033, F16H 57/021, F16C 19/54, F16C 25/06, F16C 35/04, F16C 19/06, F16C 19/36

(54) **UNIVERSAL-ANTRIEBSGEHÄUSE**
UNIVERSAL DRIVE HOUSING
BOÎTIER D'ENTRAÎNEMENT UNIVERSEL

(30) Priorität: 31.03.2020 DE 102020204202
(43) Veröffentlichungstag der Anmeldung: 08.02.2023
(73) Patentinhaber: ZF Friedrichshafen AG, 88046 Friedrichshafen (DE)
(72) Erfinder: HETMANIOK, Simon, 58456 Witten (DE)
(74) Vertreter: ZF Friedrichshafen AG
(86) Internationale Anmeldenummer: PCT/EP2021/054972
(87) Internationale Veröffentlichungsnummer: WO 2021/197725

(56) Entgegenhaltungen:
- DE-A1- 102014 209 639
- DE-U1- 29 603 579
- US-A1- 2020 096 042

## Beschreibung

Die Erfindung betrifft eine Getriebebaureihe nach dem Oberbegriff von Anspruch 1. Bei Getrieben, die in Kleinserie gefertigt werden, muss das Gehäuse kundenspezifisch ausgelegt werden. So ist etwa die Lagerung der Eingangswelle an die aufzunehmende Last anzupassen. Daraus resultieren verschiedene Arten der Lagerung der Eingangswellen. Die verschiedenen Arten der Lagerung wiederum bedingen eine unterschiedliche Ausgestaltung der Getriebegehäuse. Dadurch erhöhen sich die Herstellungskosten. Die Dokumente DE 102014209639 A1 und JPH08312760 offenbaren Getriebebaureihe mit einer Stützstruktur.

Der Erfindung liegt die Aufgabe zugrunde, die Herstellungskosten von Getrieben zu senken. Diese Aufgabe wird gelöst durch eine Getriebebaureihe nach Anspruch 1. Bevorzugte Weiterbildungen sind in den Unteransprüchen enthalten und ergeben sich aus nachfolgender Beschreibung sowie dem in den Figuren dargestellten Ausführungsbeispiel.

Eine Getriebebaureihe ist eine Gesamtheit von mindestens zwei Getrieben, die hinsichtlich der Ausprägung mindestens eines technischen Merkmals übereinstimmen. Die mindestens zwei Getriebe bilden eine Anordnung.

Ein erstes Getriebe und ein zweites Getriebe der erfindungsgemäßen Getriebebaureihe weisen jeweils eine Eingangswelle, ein Gehäuse, eine Stützstruktur und mindestens zwei, vorzugsweise genau zwei Lager, mit denen die Eingangswelle in der Stützstruktur gelagert ist, auf.

Eine Eingangswelle ist eine Welle, die ausgebildet ist, mit einem Eingangsmoment beaufschlagt zu werden. Mindestens ein Teil der Eingangswelle befindet sich außerhalb des Gehäuses. Dieser Teil wird mit dem Eingangsmoment beaufschlagt.

Eine Stützstruktur ist ein Mittel, das ausgebildet ist, Kräfte aufzunehmen und weiterzuleiten. Die Stützstrukturen des ersten Getriebes und des zweiten Getriebes sind in dem jeweiligen Gehäuse fixiert. Vorzugsweise ist die Fixierung der jeweiligen Stützstruktur in dem Gehäuse starr, das heißt ohne die Möglichkeit einer Relativbewegung zwischen der Stützstruktur und dem Gehäuse. Die Stützstruktur ist ausgebildet, Haltekräfte, die über die mindestens zwei Lager in die Stützstruktur eingeleitet werden, aufzunehmen und an das Getriebegehäuse weiterzuleiten.

Die Stützstrukturen bilden bevorzugt einen Teil des jeweiligen Gehäuses. Dies bedeutet, dass die Stützstruktur zusammen mit dem Gehäuse des jeweiligen Getriebes einen Hohlraum - das Getriebeinnere - kapselt. Die mindestens zwei Lager sind bevorzugt innerhalb dieses Hohlraums angeordnet.

Die mindestens zwei Lager des ersten Getriebes sind von gleicher Bauart. Ebenso sind die mindestens zwei Lager des zweiten Getriebes von gleicher Bauart. Lager, die von gleicher Bauart sind, gehören einer Gruppe von Lagern mit gleichartigen Ausgestaltungen eines oder mehrerer technischer Merkmale an. Alle Lager der Gruppe weisen also bestimmte technische Merkmale auf. Diese sind bei allen Lagern der Gruppe gleichartig ausgestaltet. Beispielsweise bilden Axiallager, Radiallager, Axial-Radiallager, Wälzlager, Kugellager, Kegelrollenlager, Nadellager, Tonnenlager und Gleitlager jeweils eine solche Gruppe. Bei den mindestens zwei Lagern des ersten Getriebes kann es sich etwa um Kugellager und bei den mindestens zwei Lagern des zweiten Getriebes um Kegelrollenlager handeln.

Erfindungsgemäß unterscheidet sich die Bauart der mindestens zwei Lager des ersten Getriebes von der Bauart der mindestens zwei Lager des zweiten Getriebes. Die mindestens zwei Lager des ersten Getriebes und die mindestens zwei Lager des zweiten Getriebes sind also unterschiedlicher Bauart.

Eine erste Bauart und eine zweite Bauart von Lagern unterscheiden sich, wenn es mindestens ein technisches Unterscheidungsmerkmal gibt. Hierunter ist ein technisches Merkmal zu verstehen, dessen Ausprägung bei den Lagern der ersten Bauart und bei den Lagern der zweiten Bauart jeweils gleich ist, und dessen Ausprägung sich bei den Lagern der ersten Bauart von der Ausprägung bei den Lagern der zweiten Bauart unterscheidet. So handelt es sich bei Axiallagern und Radiallagern um unterschiedliche Bauarten. Ebenso handelt es sich bei Gleitlagern und Wälzlagern um Lager unterschiedlicher Bauarten. Kugellager, Kegelrollenlager, Nadellager, Tonnenlager und Gleitlager sind Bauarten, die sich paarweise voneinander unterscheiden.

Die Stützstruktur des ersten Getriebes und die Stützstruktur des zweiten Getriebes sind baugleich. Zwei Komponenten sind baugleich, wenn sie in ihren physikalischen Parametern - insbesondere hinsichtlich ihrer Material- und Geometrieeigenschaften - im Rahmen der auftretenden Fertigungstoleranzen übereinstimmen.

Baugleiche Stützstrukturen sind von Vorteil, da sich durch Skaleneffekte Kostenvorteile ergeben. Dies gilt umso mehr, wenn als Stützstrukturen aufwändig zu fertigende Gussteile verwendet werden. Durch die unterschiedlichen Bauarten der Lager lassen sich die einzelnen Getriebe der erfindungsgemäßen Baureihe dabei an kundenindividuelle Lastfälle anpassen.

Die unterschiedlichen Bauarten der Lager können gemäß einer bevorzugten Weiterbildung mit nicht baugleichen Eingangswellen einhergehen. Dies bedeutet, dass weiterbildungsgemäß die Eingangswelle des ersten Getriebes und die Eingangswelle des zweiten Getriebes nicht baugleich sind. Die Eingangswelle des ersten Getriebes und die Eingangswelle des zweiten Getriebes weichen also in mindestens einem physikalischen Parameter derart voneinander ab, dass die Abweichung nicht mehr in den Rahmen der auftretenden Fertigungstoleranzen fällt. Insbesondere können sich die Eingangswelle des ersten Getriebes und die Eingangswelle des zweiten Getriebes hinsichtlich ihrer Bauteilgeometrien unterscheiden.

Die Weiterbildung folgt dem Gedanken, Anpassungen an kundenindividuelle Gegebenheiten durch Änderungen an kostengünstigen Bauteilen zu bewerkstelligen. So handelt es sich bei den Eingangswellen gewöhnlich um Drehteile, die insbesondere im Vergleich zu Gussteilen kostengünstig zu fertigen sind.

In einer bevorzugten Weiterbildung sind die mindestens zwei Lager des ersten Getriebes in X-Anordnung und die mindestens zwei Lager des zweiten Getriebes in O-Anordnung ausgerichtet. Dies impliziert, dass es sich bei den Lagern um Axial-Radiallager handelt.

Das erste Getriebe und das zweite Getriebe weisen in einer darüber hinaus bevorzugten Weiterbildung jeweils einen Deckel auf. Ein Deckel ist ein Mittel zum Abdecken bzw. Verschließen einer Öffnung.

Der Deckel ist in der jeweiligen Stützstruktur fixiert und deckt dadurch eine Öffnung der jeweiligen Stützstruktur ab. Der Deckel des ersten Getriebes ist in der Stützstruktur des ersten Getriebes fixiert. Ebenso ist der Deckel des zweiten Getriebes in der Stützstruktur des zweiten Getriebes fixiert. Die Fixierung ist bevorzugt starr, das heißt derart, dass keinerlei Relativbewegungen zwischen den Stützstrukturen und dem jeweiligen Deckel möglich sind. Vorzugsweise ist zwischen den Stützstrukturen und dem jeweiligen Deckel eine Dichtung angeordnet, welche die Stützstrukturen öldicht gegenüber dem jeweiligen Deckel abdichtet.

Durch die Deckel verläuft die jeweilige Eingangswelle hindurch. So verläuft die Eingangswelle des ersten Getriebes durch den Deckel des ersten Getriebes hindurch; die Eingangswelle des zweiten Getriebes verläuft durch den Deckel des zweiten Getriebes hindurch. Dies impliziert, dass die Deckel jeweils eine Öffnung aufweisen, durch welche die jeweilige Eingangswelle hindurch verläuft. Mindestens ein Teil jeder Eingangswelle befindet sich somit im Inneren des jeweiligen Getriebes. Der im Inneren des jeweiligen Getriebes befindliche Teil der jeweiligen Eingangswelle und der außerhalb befindliche Teil sind auf unterschiedlichen Seiten des jeweiligen Deckels angeordnet.

Der Deckel des ersten Getriebes und der Deckel des zweiten Getriebes sind baugleich. Dadurch ergeben sich weitere Skaleneffekte, mit denen sich Kosteneinsparungen realisieren lassen.

Der Deckel des ersten Getriebes ist bevorzugt derart weitergebildet, dass er einen Außenring eines ersten der mindestens zwei Lager des ersten Getriebes axial, das heißt parallel zu einer Drehachse der Eingangswelle des ersten Getriebes, stützt. Der Deckel bildet also ein axiales Widerlager für den Außenring des ersten Lagers.

Vorzugsweise stützt der Deckel den Außenring des ersten Lagers gegenüber einer Verschiebung in Richtung des Äußeren des ersten Getriebes.

Die Stützstruktur des zweiten Getriebes ist bevorzugt mit einem Absatz weitergebildet, der einen Außenring eines ersten der mindestens zwei Lager des zweiten Getriebes axial stützt. Die Stützstruktur des zweiten Getriebes bildet also ein axiales Widerlager für den Außenring des zweiten Lagers. Der Außenring des zweiten Lagers wird dabei bevorzugt in Richtung des Inneren des zweiten Getriebes gestützt.

Ein Absatz ist ein kreisringförmiger Teil der Oberfläche eines Bauteils, der zwischen zwei rotationssymmetrischen Kanten des Bauteils verläuft und diese miteinander verbindet. Die Kanten bilden die kreisförmigen Begrenzungslinien des Kreisrings.

Da die Stützstrukturen des ersten Getriebes und des zweiten Getriebes baugleich sind, bildet weiterbildungsgemäß auch die Stützstruktur des ersten Getriebes einen Absatz aus. Dieser kann funktionslos sein und insbesondere kein Widerlager für einen Außenring eines der mindestens zwei Lager des ersten Getriebes bilden.

Die Eingangswelle des ersten Getriebes ist bevorzugt mit einem Absatz weitergebildet, der einen Innenring des ersten Lagers des ersten Getriebes axial stützt. Der Absatz bildet also ein axiales Widerlager für den Innenring des ersten Lagers des ersten Getriebes. Vorzugsweise stützt der Absatz den Innenring in Richtung des Äußeren des ersten Getriebes.

Die Eingangswelle des zweiten Getriebes weist bevorzugt keinen entsprechenden Absatz auf, sondern ist mit einer aufgeschraubten Stellmutter weitergebildet. Diese bildet ein Widerlager für einen Innenring des ersten Lagers des zweiten Getriebes. Die Stellschraube stützt also den Innenring in axialer Richtung. Vorzugsweise stützt die Stellschraube den Innenring in Richtung des Inneren des zweiten Getriebes. Die Abstützung durch den Absatz der Eingangswelle des ersten Getriebes und die Stellschraube der Eingangswelle des zweiten Getriebes erfolgt damit vorzugsweise in entgegengesetzte Richtungen.

Die Stützstruktur des ersten Getriebes weist in einer bevorzugten Weiterbildung eine Nut auf. Vorzugsweise ist diese rotationssymmetrisch. In die Nut ist ein Sicherungsring eingesetzt, der ein axiales Widerlager für einen Außenring eines zweiten der mindestens zwei Lager des ersten Getriebes bildet. Der Sicherungsring stützt den Außenring in axialer Richtung. Vorzugsweise stützt der Sicherungsring den Außenring in Richtung des Inneren des ersten Getriebes ab.

Da die Stützstrukturen des ersten Getriebes und des zweiten Getriebes baugleich sind, weist auch die Stützstruktur des zweiten Getriebes eine rotationssymmetrische Nut auf. Diese kann funktionslos sein und entsprechend ohne einen eingesetzten Sicherungsring verbleiben.

Bevorzugt ist die Stützstruktur des zweiten Getriebes mit einem Absatz weitergebildet, der als Widerlager für einen Außenring eines zweiten der mindestens zwei Lager des zweiten Getriebes dient. Der Absatz stützt den Außenring in axialer Richtung. Vorzugsweise wird der Außenring in Richtung des Äußeren des zweiten Getriebes gestützt.

Da die Stützstrukturen des ersten Getriebes und des zweiten Getriebes baugleich sind, weist die Stützstruktur des ersten Getriebes einen entsprechenden Absatz auf. Dieser kann funktionslos sein oder ein Widerlager für den Außenring des zweiten Lagers des ersten Getriebes bilden.

In darüber hinaus bevorzugten Weiterbildungen bilden die Eingangswellen des ersten Getriebes und/oder des zweiten Getriebes jeweils einen Absatz aus. Die Absätze stützen den jeweiligen Innenring des zweiten Lagers des jeweiligen Getriebes in axialer Richtung. Sie bilden also ein axiales Widerlager für den jeweiligen Innenring.

Die Abstützung durch die Absätze der Eingangswellen erfolgt bevorzugt in entgegengesetzte Richtungen. So stützt der Absatz der Eingangswelle des ersten Getriebes bevorzugt den Innenring des zweiten Lagers des ersten Getriebes in Richtung des Äußeren des ersten Getriebes, während der Absatz der Eingangswelle des zweiten Getriebes den Innenring des zweiten Lagers des zweiten Getriebes in Richtung des Inneren des zweiten Getriebes stützt.

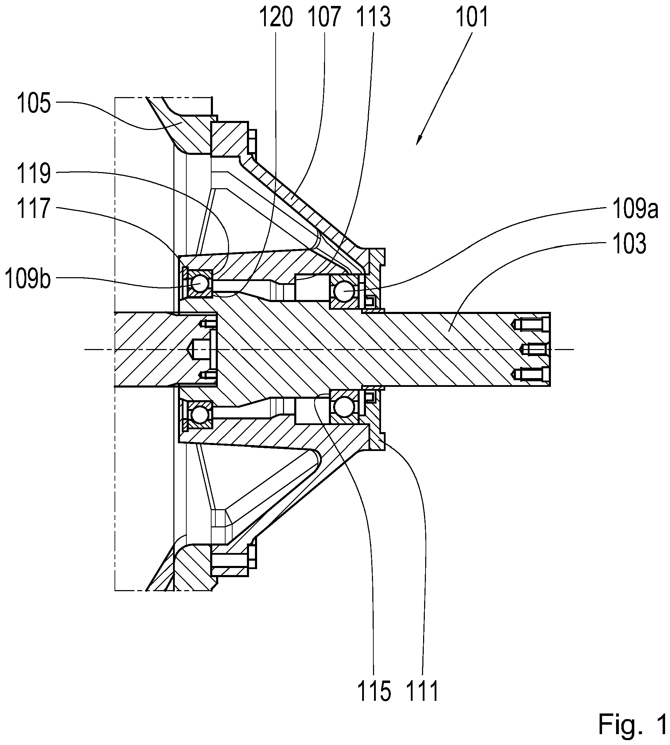

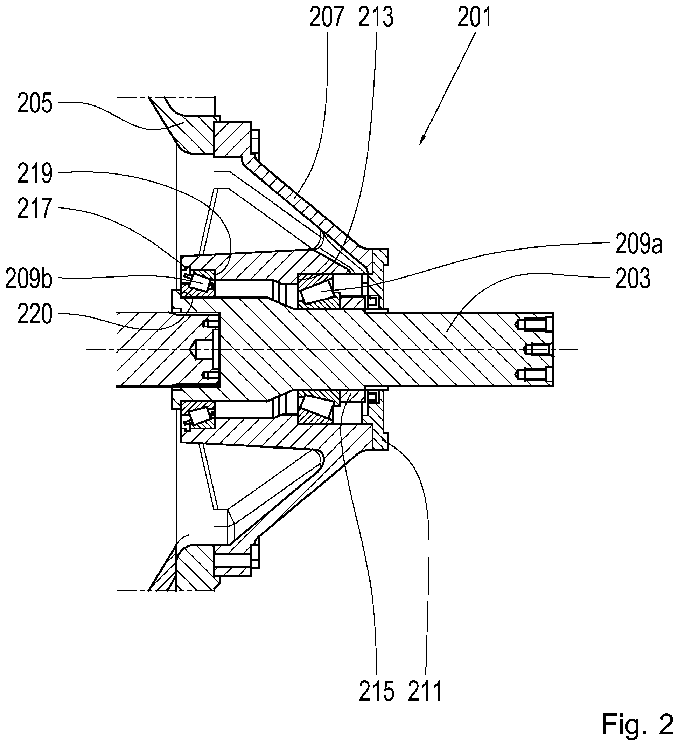

Ein bevorzugtes Ausführungsbeispiel der Erfindung ist in den Figuren 1 und 2 dargestellt. Im Einzelnen zeigt:
Fig. 1 ein erstes Getriebe einer Getriebebaureihe; und
Fig. 2 ein zweites Getriebe der Getriebebaureihe.

Das in Fig. 1 dargestellte erste Getriebe 101 und das in Fig. 2 dargestellte zweite Getriebe 201 gehören zu einer gemeinsamen Baureihe. Die Getriebe 101, 201 weisen jeweils eine Eingangswelle 103, 203 auf. Ein Gehäuse 105 des ersten Getriebes 101 und ein Gehäuse 205 des zweiten Getriebes 201 sind baugleich. Die Gehäuse 105, 205 bilden jeweils eine Öffnung aus, auf die eine Stützstruktur 107, 207 aufgeschraubt ist. Die Stützstruktur 107 des ersten Getriebes 101 und die Stützstruktur 207 des zweiten Getriebes 201 sind baugleich.

Die Eingangswelle 103 des ersten Getriebes 101 ist mittels eines ersten Kugellagers 109a und eines zweiten Kugellagers 109b drehbar in der Stützstruktur 107 des ersten Getriebes 101 gelagert. Analog ist die Eingangswelle 203 des zweiten Getriebes 201 mittels eines ersten Kegelrollenlagers 209a und eines zweiten Kegelrollenlagers 209b drehbar in der Stützstruktur 207 des zweiten Getriebes 201 gelagert.

Auf die Stützstrukturen 107, 207 ist jeweils ein Deckel 111, 211 aufgeschraubt. Durch eine mittige Öffnung in den Deckeln 111, 211 verläuft die jeweilige Eingangswelle 103, 203. Der Deckel 103 des ersten Getriebes 101 ist ebenso wie der Deckel 211 des zweiten Getriebes 201 gegenüber der jeweiligen Eingangswelle 103, 203 abgedichtet, sodass zwischen den Deckeln 111, 211 und der jeweiligen Eingangswelle 103, 203 kein Öl austreten kann.

Die Stützstruktur 107 des ersten Getriebes 101 und die Stützstruktur 207 des zweiten Getriebes 201 bilden jeweils einen ersten Absatz 113, 213. Der erste Absatz 213 der Stützstruktur 207 des zweiten Getriebes 201 bildet ein axiales Widerlager für einen Außenring des ersten Kegelrollenlagers 209a. Der Absatz erste 213 stützt den Außenring dabei zum Getriebeinneren hin ab.

Der Absatz erste 113 der Stützstruktur 107 des ersten Getriebes 101 ist funktionslos.

Die Eingangswelle 103 des ersten Getriebes 101 bildet einen ersten Absatz 115 als Widerlager für einen Innenring des ersten Kugellagers 109 aus. Dieser stützt den Innenring zum Getriebeinneren hin ab.

Der Deckel 111 des ersten Getriebes 101 bildet ein Widerlager für einen Außenring des ersten Kugellagers 109a. Der Außenring wird durch den Deckel 111 zum Getriebeäußeren hin abgestützt. Da die Deckel 111, 211 des ersten Getriebes 101 und des zweiten Getriebes 201 baugleich sind, bildet der Deckel 211 des zweiten Getriebes 201 ein entsprechendes Widerlager aus. Dieses ist allerdings funktionslos.

Ein Außenring des zweiten Kugellagers 109b wird zum Getriebeinneren hin abgestützt. Dazu bildet die Stützstruktur 107 des ersten Getriebes 101 eine Nut 117 aus, in die ein Sicherungsring eingesetzt ist. Dieser bildet ein Widerlager für die Abstützung des Außenrings des zweiten Kugellagers 109b.

Da die Stützstrukturen 107, 207 des ersten Getriebes 101 und des zweiten Getriebes 201 baugleich sind, weist auch die Stützstruktur 207 des zweiten Getriebes 201 eine entsprechende Nut 217 auf. Diese ist allerdings funktionslos und bleibt daher leer.

Ein zweiter Absatz 119 der Stützstruktur 107 des ersten Getriebes 101 bildet ein weiteres Widerlager für den Außenring des zweiten Kugellagers 109b. Dadurch wird der Außenring des zweiten Kugellagers 109b zum Getriebeäußeren hin abgestützt. Der Außenring des zweiten Kugellagers 109b befindet sich zwischen dem in die Nut 117 eingesetzten Sicherungsring und dem zweiten Absatz 119 der Stützstruktur 107 des ersten Getriebes 101.

Da die Stützstrukturen 107, 207 des ersten Getriebes 101 und des zweiten Getriebes 201 baugleich sind, weist auch die Stützstruktur 207 des zweiten Getriebes 201 einen zweiten Absatz 219 auf. Dieser bildet analog ein Widerlager für einen Außenring des zweiten Kegelrollenlagers 209b. Dadurch wird der Außenring des zweiten Kegelrollenlagers 209b zum Getriebeäußeren hin abgestützt.

Die Eingangswellen 103, 203 des ersten Getriebes 101 und des zweiten Getriebes 201 bilden jeweils einen Absatz 120, 220 als Widerlager für einen Innenring des zweiten Kugellagers 109b bzw. des zweiten Kegelrollenlagers 209b. Ein zweiter Absatz 120 der Eingangswelle 103 des ersten Getriebes 101 dient als Widerlager für einen Innenring des zweiten Kugellagers 109b und stützt diesen zum Getriebeäußeren hin ab. Analog bildet ein Absatz 220 der Eingangswelle 203 des zweiten Getriebes 201 ein Widerlager für einen Innenring des zweiten Kegelrollenlagers 209b. Der Innenring des zweiten Kegelrollenlagers 209b wird allerdings durch den zweiten Absatz 220 in entgegengesetzte Richtung, d.h. zum Getriebeinneren hin abgestützt.

Durch die beschriebene Anordnung von Widerlagern sind das erste Kugellager 109a und das zweite Kugellager 109b in X-Anordnung konfiguriert. Das erste Kegelrollenlager 209a und das zweite Kegelrollenlager 209b bilden eine Anordnung in O-Konfiguration.

### Bezugszeichen

- 101: erstes Getriebe
- 103: Eingangswelle
- 105: Gehäuse
- 107: Stützstruktur
- 109a: erstes Kugellager
- 109b: zweites Kugellager
- 111: Deckel
- 113: erster Absatz der Stützstruktur
- 115: erster Absatz der Eingangswelle
- 117: Nut
- 119: zweiter Absatz der Stützstruktur
- 120: zweiter Absatz der Eingangswelle
- 201: zweites Getriebe
- 203: Eingangswelle
- 205: Gehäuse
- 207: Stützstruktur
- 209a: erstes Kegelrollenlager
- 209b: zweites Kegelrollenlager
- 211: Deckel
- 213: erster Absatz der Stützstruktur
- 215: Stellmutter
- 217: Nut
- 219: zweiter Absatz der Stützstruktur
- 220: Absatz der Eingangswelle

## Patentansprüche

1. Getriebebaureihe mit einem ersten Getriebe (101) und einem zweiten Getriebe (201); wobei
das erste Getriebe (101) und das zweite Getriebe (201) jeweils eine Eingangswelle (103, 203), ein Gehäuse (105, 205), eine in dem Gehäuse fixierte Stützstruktur (107, 207) und mindestens zwei Lager (109a, 109b, 209a, 209b) aufweisen, mit denen die Eingangswelle (103, 203) drehbar in der Stützstruktur (107, 207) gelagert ist; wobei die mindestens zwei Lager (109a, 109b) des ersten Getriebes (101) und die mindestens zwei Lager (209a, 209b) des zweiten Getriebes (201) jeweils von gleicher Bauart sind; wobei
die Bauart der mindestens Lager (109a, 109b) des ersten Getriebes (101) sich von der Bauart der mindestens Lager (209a, 209b) des zweiten Getriebes (201) unterscheidet; und wobei
die Stützstrukturen (107, 207) baugleich sind **dadurch gekennzeichnet, dass**
die Stützstrukturen (107, 207) auf eine Öffnung des jeweiligen Gehäuses (105, 205) aufgeschraubt sind.

2. Getriebebaureihe nach Anspruch 1; **dadurch gekennzeichnet, dass** die Eingangswellen (103, 203) nicht baugleich sind.

3. Getriebebaureihe nach einem der vorhergehenden Ansprüche; **dadurch gekennzeichnet, dass**
die mindestens zwei Lager (109a, 109b) des ersten Getriebes (101) in X-Anordnung und die mindestens zwei Lager (209a, 209b) des zweiten Getriebes (201) in O-Anordnung ausgerichtet sind

4. Getriebebaureihe nach einem der vorhergehenden Ansprüche; **dadurch gekennzeichnet, dass**
das erste Getriebe (101) und das zweite Getriebe (201) jeweils einen Deckel (111, 211) aufweisen, der in der jeweiligen Stützstruktur (1007, 207) fixiert ist, in durch den die jeweilige Eingangswelle (103, 203) hindurchverläuft; wobei
der Deckel (111) des ersten Getriebes und der Deckel (211) des zweiten Getriebes (201) baugleich sind.

5. Getriebebaureihe nach dem vorhergehenden Anspruch; **dadurch gekennzeichnet, dass**
der Deckel (111) des ersten Getriebes (101) einen Außenring eines ersten Lagers (109a) des ersten Getriebes (101) axial stützt.

6. Getriebebaureihe nach einem der vorhergehenden Ansprüche; **dadurch gekennzeichnet, dass**
die Stützstruktur (207) des zweiten Getriebes (201) einen Absatz (213) ausbildet, der einen Außenring eines ersten Lagers (209a) des zweiten Getriebes (201) axial stützt.

7. Getriebebaureihe nach einem der vorhergehenden Ansprüche; **dadurch gekennzeichnet, dass**
die Eingangswelle (103) des ersten Getriebes (101) einen Absatz (115) ausbildet, der einen Innenring des ersten Lagers (109a) des ersten Getriebes (101) axial stützt.

8. Getriebebaureihe nach einem der vorhergehenden Ansprüche; **gekennzeichnet durch**
eine auf die Eingangswelle (203) des zweiten Getriebes (201) aufgeschraubte Stellmutter (113), die einen Innenring des ersten Lagers (209a) des zweiten Getriebes (201) axial stützt.

9. Getriebebaureihe nach einem der vorhergehenden Ansprüche; **dadurch gekennzeichnet, dass**
die Stützstruktur (107) des ersten Getriebes (101) eine Nut (117) aufweist, in die ein Sicherungsring (119) eingesetzt ist; wobei
der Sicherungsring (119) einen Außenring eines zweiten Lagers (109b) des ersten Getriebes (101) axial stützt.

10. Getriebebaureihe nach einem der vorhergehenden Ansprüche; **dadurch gekennzeichnet, dass**
die Stützstruktur des zweiten Getriebes (201) einen Absatz (119, 219) ausbildet, der einen Außenring eines zweiten Lagers (209ba) des zweiten Getriebes (201) axial stützt.

11. Getriebebaureihe nach einem der vorhergehenden Ansprüche; **dadurch gekennzeichnet, dass**
die Eingangswelle (103) des ersten Getriebes (101) einen Absatz (120) ausbildet, der einen Innenring des zweiten Lagers (109b) des ersten Getriebes (101) axial stützt.

12. Getriebebaureihe nach einem der vorhergehenden Ansprüche; **dadurch gekennzeichnet, dass**
die Eingangswelle (203) des zweiten Getriebes (201) einen Absatz (220) ausbildet, der einen Innenring des zweiten Lagers (209b) des zweiten Getriebes axial stützt.

## Claims

1. Transmission series comprising a first transmission (101) and a second transmission (201); wherein
the first transmission (101) and the second transmission (201) each have an input shaft (103, 203), a housing (105, 205), a support structure (107, 207) fixed in the housing, and at least two bearings (109a, 109b, 209a, 209b) by means of which the input shaft (103, 203) is rotatably mounted in the support structure (107, 207); wherein the at least two bearings (109a, 109b) of the first transmission (101) and the at least two bearings (209a, 209b) of the second transmission (201) are each of identical design; wherein
the design of the at least bearings (109a, 109b) of the first transmission (101) differs from the design of the at least bearings (209a, 209b) of the second transmission (201); and wherein
the support structures (107, 207) are structurally identical, **characterized in that**
the support structures (107, 207) are screwed onto an opening in the respective housing (105, 205).

2. Transmission series according to Claim 1; **characterized in that**
the input shafts (103, 203) are not structurally identical.

3. Transmission series according to either of the preceding claims; **characterized in that**
the at least two bearings (109a, 109b) of the first transmission (101) are oriented in an X arrangement and the at least two bearings (209a, 209b) of the second transmission (201) are oriented in an O arrangement.

4. Transmission series according to one of the preceding claims; **characterized in that**
the first transmission (101) and the second transmission (201) each have a cover (111, 211) which is fixed in the respective support structure (1007, 207) and through which the respective input shaft (103, 203) runs; wherein the cover (111) of the first transmission and the cover (211) of the second transmission (201) are structurally identical.

5. Transmission series according to the preceding claim; **characterized in that**
the cover (111) of the first transmission (101) axially supports an outer ring of a first bearing (109a) of the first transmission (101).

6. Transmission series according to one of the preceding claims; **characterized in that**
the support structure (207) of the second transmission (201) forms a shoulder (213) which axially supports an outer ring of a first bearing (209a) of the second transmission (201).

7. Transmission series according to one of the preceding claims; **characterized in that**
the input shaft (103) of the first transmission (101) forms a shoulder (115) which axially supports an inner ring of the first bearing (109a) of the first transmission (101).

8. Transmission series according to one of the preceding claims; **characterized by**
an adjusting nut (113) which is screwed onto the input shaft (203) of the second transmission (201) and axially supports an inner ring of the first bearing (209a) of the second transmission (201).

9. Transmission series according to one of the preceding claims; **characterized in that**
the support structure (107) of the first transmission (101) has a groove (117) into which a securing ring (119) is inserted; wherein
the securing ring (119) axially supports an outer ring of a second bearing (109b) of the first transmission (101) .

10. Transmission series according to one of the preceding claims; **characterized in that**
the support structure of the second transmission (201) forms a shoulder (119, 219) which axially supports an outer ring of a second bearing (209ba) of the second transmission (201).

11. Transmission series according to one of the preceding claims; **characterized in that**
the input shaft (103) of the first transmission (101) forms a shoulder (120) which axially supports an inner ring of the second bearing (109b) of the first transmission (101).

12. Transmission series according to one of the preceding claims; **characterized in that**
the input shaft (203) of the second transmission (201) forms a shoulder (220) which axially supports an inner ring of the second bearing (209b) of the second transmission.

## Revendications

1. Série de transmissions, comprenant une première transmission (101) et une deuxième transmission (201) ; dans laquelle
la première transmission (101) et la deuxième transmission (201) présentent respectivement un arbre d'entrée (103, 203), un carter (105, 205), une structure de support (107, 207) fixée dans le carter, et au moins deux paliers (109a, 109b, 209a, 209b) par l'intermédiaire desquels l'arbre d'entrée (103, 203) est monté rotatif dans la structure de support (107, 207) ; dans laquelle les au moins deux paliers (109a, 109b) de la première transmission (101) et les au moins deux paliers (209a, 209b) de la deuxième transmission (201) sont respectivement du même modèle ; dans laquelle
le modèle des au moins paliers (109a, 109b) de la première transmission (101) est différent du modèle des au moins paliers (209a, 209b) de la deuxième transmission (201) ; et dans laquelle
les structures de support (107, 207) sont de construction identique,
**caractérisée en ce que** les structures de support (107, 207) sont vissées sur une ouverture du carter (105, 205) respectif.

2. Série de transmissions selon la revendication 1 ; **caractérisée en ce que** les arbres d'entrée (103, 203) ne sont pas de construction identique.

3. Série de transmissions selon l'une quelconque des revendications précédentes ; **caractérisée en ce que** les au moins deux paliers (109a, 109b) de la première transmission (101) sont orientés dans un agencement en X et les au moins deux paliers (209a, 209b) de la deuxième transmission (201) sont orientés dans un agencement en O.

4. Série de transmissions selon l'une quelconque des revendications précédentes ; **caractérisée en ce que** la première transmission (101) et la deuxième transmission (201) présentent respectivement un couvercle (111, 211) qui est fixé dans la structure de support (1007, 207) respective à travers laquelle s'étend l'arbre d'entrée (103, 203) respectif ; dans laquelle le couvercle (111) de la première transmission et le couvercle (211) de la deuxième transmission (201) sont de construction identique.

5. Série de transmissions selon la revendication précédente ; **caractérisée en ce que** le couvercle (111) de la première transmission (101) supporte axialement une bague extérieure d'un premier palier (109a) de la première transmission (101).

6. Série de transmissions selon l'une quelconque des revendications précédentes ; **caractérisée en ce que** la structure de support (207) de la deuxième transmission (201) réalise un épaulement (213) qui supporte axialement une bague extérieure d'un premier palier (209a) de la deuxième transmission (201).

7. Série de transmissions selon l'une quelconque des revendications précédentes ; **caractérisée en ce que** l'arbre d'entrée (103) de la première transmission (101) réalise un épaulement (115) qui supporte axialement une bague intérieure du premier palier (109a) de la première transmission (101).

8. Série de transmissions selon l'une quelconque des revendications précédentes ; **caractérisée par** un écrou de réglage (113) vissé sur l'arbre d'entrée (203) de la deuxième transmission (201) et qui supporte axialement une bague intérieure du premier palier (209a) de la deuxième transmission (201).

9. Série de transmissions selon l'une quelconque des revendications précédentes ; **caractérisée en ce que** la structure de support (107) de la première transmission (101) présente une rainure (117) dans laquelle est insérée une bague de retenue (119) ; dans laquelle la bague de retenue (119) supporte axialement une bague extérieure d'un deuxième palier (109b) de la première transmission (101).

10. Série de transmissions selon l'une quelconque des revendications précédentes ; **caractérisée en ce que** la structure de support de la deuxième transmission (201) réalise un épaulement (119, 219) qui supporte axialement une bague extérieure d'un deuxième palier (209ba) de la deuxième transmission (201).

11. Série de transmissions selon l'une quelconque des revendications précédentes ; **caractérisée en ce que** l'arbre d'entrée (103) de la première transmission (101) réalise un épaulement (120) qui supporte axialement une bague intérieure du deuxième palier (109b) de la première transmission (101).

12. Série de transmissions selon l'une quelconque des revendications précédentes ; **caractérisée en ce que** l'arbre d'entrée (203) de la deuxième transmission (201) réalise un épaulement (220) qui supporte axialement une bague intérieure du deuxième palier (209b) de la deuxième transmission.
